(19) Europäisches Patentamt
European Patent Office
Office européen des brevets

(11) **EP 4 455 638 A1**

(12) **EUROPEAN PATENT APPLICATION**

(43) Date of publication:
**30.10.2024 Bulletin 2024/44**

(51) International Patent Classification (IPC):
***G01N 21/03*** *(2006.01)*

(21) Application number: **24170820.5**

(52) Cooperative Patent Classification (CPC):
**G01N 21/031**

(22) Date of filing: **17.04.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.04.2023 JP 2023073866**

(71) Applicant: **Yokogawa Electric Corporation
Tokyo 180-8750 (JP)**

(72) Inventors:
• **SAKAMAKI, Yasuo
Musashino-shi, Tokyo,, 180-8750, (JP)**

• **SUGIYAMA, Yumiko
Musashino-shi, Tokyo,, 180-8750, (JP)**
• **TEZUKA, Kentaro
Musashino-shi, Tokyo,, 180-8750, (JP)**
• **UNEME, Shigeo
Musashino-shi, Tokyo,, 180-8750, (JP)**
• **KOBAKO, Saki
Musashino-shi, Tokyo,, 180-8750, (JP)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **GAS MEASUREMENT APPARATUS**

(57)     Various characteristics in laser absorption spectroscopy using multiple reflections are improved. A gas measurement apparatus 1 according to the present disclosure measures a gas concentration by laser absorption spectroscopy. The gas measurement apparatus 1 includes a first corner cube 10, a second corner cube 20 disposed opposite the first corner cube 10, a laser source 30 that emits a laser beam to the first corner cube 10, and a light receiving element 40 that receives the laser beam that has been reflected multiple times through a target gas between the first and second corner cubes 10 and 20. The second corner cube 20 is disposed so that a centerline parallel to incident and exit light centering at incident and exit positions of the first corner cube 10 is displaced from a centerline parallel to incident and exit light centering at incident and exit positions of the second corner cube 20.

*FIG. 3*

# Description

## CROSS-REFERENCE TO RELATED APPLICATION

This application claims priority to Japanese Patent Application No. 2023-073866, filed on April 27, 2023, the entire contents of which are incorporated herein by reference.

## TECHNICAL FIELD

The present disclosure relates to a gas measurement apparatus.

## BACKGROUND

Laser absorption spectroscopy has been known as a method of measuring a gas concentration. The laser absorption spectroscopy is a method of measuring a gas concentration by measuring the absorbance of a laser beam that has passed through a gas, taking advantage of the characteristics of molecules in the gas that absorb light at a specific wavelength.

In the laser absorption spectroscopy, the longer the optical path length of a laser beam that passes through a gas, the higher the measurement accuracy becomes. When a gas concentration is measured in a pipe, tank, or the like, the size of the pipe, tank, or the like is limited. Accordingly, a method of multiple reflections in which a gas concentration is measured by passing a laser beam back and forth multiple times to increase an optical path length is known.

For example, Patent Literature (PTL) 1 discloses a configuration using a Herriott cell, as the method of multiple reflections.

## CITATION LIST

Patent Literature

PTL 1: JP 2019-215211 A

## SUMMARY

One of challenges in laser absorption spectroscopy using multiple reflections is to improve various characteristics, such as measurement stability when the position of a component used for measurement varies and attenuation of light intensity when a laser beam is reflected.

It would be helpful to provide a gas measurement apparatus that can improve various characteristics in laser absorption spectroscopy using multiple reflections.

A gas measurement apparatus according to some embodiments is a gas measurement apparatus configured to measure a gas concentration by laser absorption spectroscopy, the gas measurement apparatus including:

a first corner cube or first right angle prism;
a second corner cube or second right angle prism disposed opposite the first corner cube or first right angle prism;
a laser source configured to emit a laser beam to the first corner cube or first right angle prism; and
a light receiving element configured to receive the laser beam that has been reflected multiple times through a target gas between the first corner cube or first right angle prism and the second corner cube or second right angle prism,
wherein the second corner cube or second right angle prism is disposed so that a centerline that is parallel to incident and exit light centering at an incident position and an exit position of the first corner cube or first right angle prism is displaced from a centerline that is parallel to incident and exit light centering at an incident position and an exit position of the second corner cube or second right angle prism. Such a gas measurement apparatus can improve various characteristics in laser absorption spectroscopy using multiple reflections.

In a gas measurement apparatus according to an embodiment, the number of reflections of the laser beam between the first corner cube or first right angle prism and the second corner cube or second right angle prism may be adjusted by a distance by which the centerline of the first corner cube or first right angle prism and the centerline of the second corner cube or second right angle prism are displaced. Therefore, the number of reflections of the laser beam can be easily adjusted.

In a gas measurement apparatus according to an embodiment, an incident surface of the first corner cube or first right angle prism and an incident surface of the second corner cube or second right angle prism may be inclined with respect to a plane perpendicular to a direction in which the laser source emits the laser beam to the first corner cube or first right angle prism. This reduces the effects of unwanted reflections from the incident surfaces.

In a gas measurement apparatus according to an embodiment, an incident surface of the first corner cube or first right angle prism and an incident surface of the second corner cube or second right angle prism may be close in contact with window glass provided in a pipe with the target gas inside. This prevents a gap from being left between each of the incident surfaces of the first corner cube or first right angle prism and the second corner cube or second right angle prism and the window glass provided in the pipe.

In a gas measurement apparatus according to an embodiment, when a first direction denotes a direction in which the centerline of the first corner cube or first right angle prism and the centerline of the second corner cube or second right angle prism are displaced, a third direction denotes a direction in which the laser beam is incident on the first corner cube or first right angle prism, and a second direction denotes a direction orthogonal to the first direction and the third direction, the laser source may be disposed in a position that is displaced from a center to the second direction by a predetermined distance. This allows the gas measurement apparatus to measure a gas concentration over a wide area of gas distribution.

In a gas measurement apparatus according to an embodiment, the laser source may emit the laser beam obliquely with respect to an incident surface of the first corner cube or first right angle prism. Therefore, the number of reflections can be adjusted by changing an incident angle of the laser beam emitted from the laser source on the prism, and the effects of optical interference caused by unwanted reflections, which occur on incident and exit surfaces of the prisms, can be reduced.

According to the present disclosure, it is possible to provide a gas measurement apparatus that can improve various characteristics in laser absorption spectroscopy using multiple reflections.

BRIEF DESCRIPTION OF THE DRAWINGS

In the accompanying drawings:

FIG. 1 is a diagram illustrating a schematic configuration of a gas measurement apparatus using a conventional Herriott cell;
FIG. 2 is a diagram illustrating a schematic configuration of a gas measurement apparatus that measures the concentration of a target gas in a pipe using a conventional Herriott cell;
FIG. 3 is a diagram illustrating a schematic configuration of a gas measurement apparatus according to an embodiment;
FIG. 4A is a diagram of a first corner cube in FIG. 3, viewed from an incident surface;
FIG. 4B is a diagram of a second corner cube in FIG. 3, viewed from an incident surface;
FIG. 5 is a diagram illustrating how the first corner cube reflects incident light;
FIG. 6 is a diagram illustrating a schematic configuration of the gas measurement apparatus according to the embodiment when the number of reflections is changed;
FIG. 7A is a diagram of a first corner cube in FIG. 6, viewed from an incident surface;
FIG. 7B is a diagram of a second corner cube in FIG. 6, viewed from an incident surface;
FIG. 8 is a diagram illustrating that the gas measurement apparatus according to the embodiment is stable against angular variations;
FIG. 9 is a diagram illustrating that the corner cubes of the gas measurement apparatus according to the embodiment are disposed in close contact with window glass provided in a pipe;
FIG. 10 is a diagram illustrating a schematic configuration of a gas measurement apparatus according to a first variation;
FIG. 11 is a diagram illustrating a schematic configuration of a gas measurement apparatus according to a second variation;
FIG. 12 is a diagram illustrating a schematic configuration of a gas measurement apparatus according to a third variation;
FIG. 13A is a diagram of a first corner cube in FIG. 12, viewed from an incident surface;
FIG. 13B is a diagram of a second corner cube in FIG. 12, viewed from an incident surface; and
FIG. 14 is a diagram schematically illustrating a gas measurement apparatus according to a fourth variation.

DETAILED DESCRIPTION

(Herriott Cell)

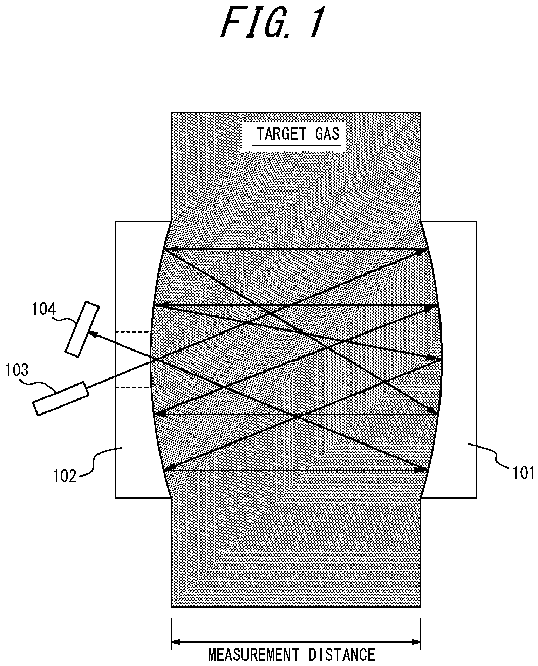

First, a gas measurement apparatus using a conventional Herriott cell will be described. FIG. 1 is a diagram illustrating a schematic configuration of the gas measurement apparatus using the conventional Herriott cell.

The gas measurement apparatus using the Herriott cell illustrated in FIG. 1 includes a first concave mirror 101, a second concave mirror 102, a laser source 103, and a light receiving element 104.

The first concave mirror 101 and the second concave mirror 102 are disposed opposite each other. A target gas to be measured is present between the first and second concave mirrors 101 and 102.

The laser source 103 emits a laser beam so that the laser beam passes through a hole provided in the second concave mirror 102. The laser beam is reflected multiple times from the first and second concave mirrors 101 and 102 and exits through a hole provided in the second concave mirror 102.

The light receiving element 104 receives the laser beam that has exited through the hole provided in the second concave mirror 102.

In the gas measurement apparatus using the Herriott cell, the optical path length of the laser beam passing through the target gas becomes long due to multiple reflections from the first and second concave mirrors 101 and 102.

As illustrated in FIG. 1, even when a measurement distance, which is an end-to-end distance of the target gas, is short, the gas measurement apparatus using the Herriott cell can increase the optical path length of the laser beam passing through the target gas by reflecting the laser beam multiple times. Hereafter, the term "measurement distance" may be used to mean the end-to-end distance of the target gas.

Thus, by increasing the optical path length by reflecting the laser beam multiple times from the first and second concave mirrors 101 and 102, the gas measurement apparatus using the Herriott cell can measure a gas concentration with high accuracy.

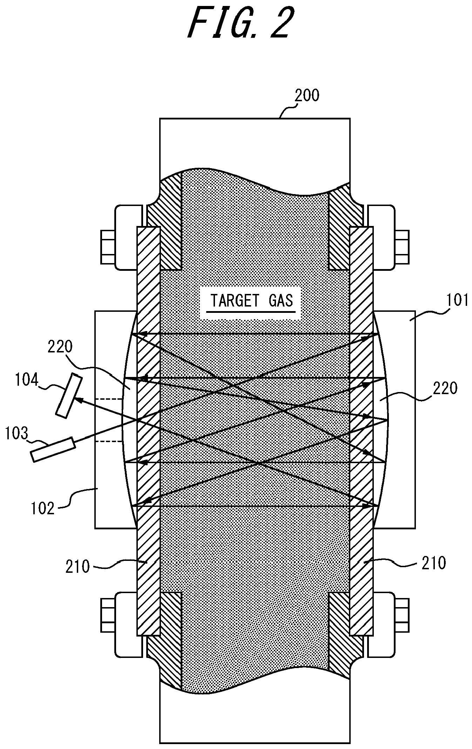

FIG. 2 is a diagram illustrating a schematic configuration of a gas measurement apparatus using a conventional Herriott cell that measures the concentration of a target gas in a pipe 200.

In the example illustrated in FIG. 2, window glass 210 is provided in the pipe 200 with the target gas inside. The window glass 210 is provided in the pipe 200 as a measurement window for measurement of the target gas.

In the example illustrated in FIG. 2, a first concave mirror 101 and a second concave mirror 102 are disposed in contact with the window glass 210.

The gas measurement apparatuses using the conventional Herriott cells, as illustrated in FIGS. 1 and 2, have the following issues.

<Issue 1>

In the Herriott cell, the optical path of the laser beam emitted by the laser source 103 depends on parameters, such as an incident angle of the laser beam, the position of the laser source 103, the measurement distance, the number of reflections, the positions of the first and second concave mirrors 101 and 102, and the curvatures of the first and second concave mirrors 101 and 102. A physical variation such as a distortion due to vibration, temperature, or the like causes the above parameters to vary, and causes the optical path to vary too. In particular, when the angles of the first and second concave mirrors 101 and 102 vary, a variation in the optical path increases in proportion to the number of reflections because the effect accumulates with each reflection. The variation in the optical path causes variations in the optical path length, light intensity, and the light receiving position of the light receiving element 104, resulting in an increase in measurement noise, variations in a measurement value, and the like.

<Issue 2>

Reflective surfaces of the first and second concave mirrors 101 and 102 have a mirror coating. A material for the mirror coating is difficult to reflect all of the laser beam, so part of the laser beam incident on the first and second concave mirrors 101 and 102 is transmitted. Therefore, whenever the laser beam is reflected from the first and second concave mirrors 101 and 102, the light intensity of the laser beam is attenuated, and the light intensity of the laser beam received by the light receiving element 104 is reduced thereby. The reduction in the light intensity of the laser beam due to transmission of the laser beam deteriorates a signal-to-noise ratio, resulting in an increase in measurement noise, variations in a measurement value, and the like.

<Issue 3>

Each of the parameters listed in Issue 1 needs to be adjusted to a value corresponding to the measurement distance. Therefore, when the concentrations of internal gases in pipes or tanks of different sizes are measured, each parameter needs to be adjusted each time. In particular, to change the curvatures of the first and second concave mirrors 101 and 102, another first concave mirror 101 and another second concave mirror 102 need to be prepared, so it is difficult to perform measurement using components in a versatile manner.

<Issue 4>

Increasing the number of reflections and lengthening the optical path length of the laser beam basically enable measurement of a gas concentration with high accuracy. However, making the optical path length too long brings about an increase in measurement noise and variations in a measurement value due to a reduction in the light intensity of the laser beam, which is caused by the influence of dust contained in the target gas, by deterioration in the shape of the beam diameter of the laser beam, and the like. Therefore, it is desirable to adjust the number of reflections to an appropriate number, but in this case, it is necessary to adjust each parameter indicated in Issue 1. However, the configuration using the Herriott cell does not allow easy adjustment of each parameter, so the adjustment of the number of reflections is not easy.

<Issue 5>

Adjusting the incident angle of the laser beam from the laser source 103 and the incident position of the laser beam increases adjustment sensitivity because variations in a reflection angle and a reflection position accumulate with each reflection. Therefore, increasing the number of reflections increases the adjustment sensitivity to adjustment of an optical axis, and causes difficulty in fine adjustment of the optical axis of the laser source 103.

<Issue 6>

Since the Herriott cell uses the first and second concave mirrors 101 and 102, it is necessary to take the concaves into account when the optical path length of the laser beam is calculated. Therefore, complex calculations are required to calculate the optical path length.

<Issue 7>

As illustrated in FIG. 2, when the first and second concave mirrors 101 and 102 are used in the Herriott cell, the first and second concave mirrors 101 and 102 may be installed on the window glass 210 for measurement of the pipe 200. In this case, since the first and second concave mirrors 101 and 102 are concave in shape, a gap 220 is left between each of the first and second concave mirrors 101 and 102 and the window glass 210. Since a gas present in the gap 220 is different from the target gas to be measured, an optical path length passing through the gap 220 becomes an error factor. When the concentration of the target gas is small or the measurement distance is short, in particular, the effect of an error caused by the gap 220 becomes large.

<Issue 8>

As illustrated in FIG. 1, the second concave mirror 102 needs to be provided with the holes that allow the laser beam emitted by the laser source 103 to pass through and the laser beam to be received by the light receiving element 104 to pass through. Therefore, it is necessary to add hole machining to the second concave mirror 102, causing an increase in processing cost.

<Issue 9>

As described in Issue 2, it is necessary to apply the mirror coating to the reflective surfaces of the first and second concave mirrors 101 and 102. In order to reduce the attenuation of light intensity when the laser beam is reflected from the first and second concave mirrors 101 and 102, it is necessary to use a material with high reflectivity as the material for the mirror coating, causing an increase in processing cost.

(Gas Measurement Apparatus of Present Disclosure)

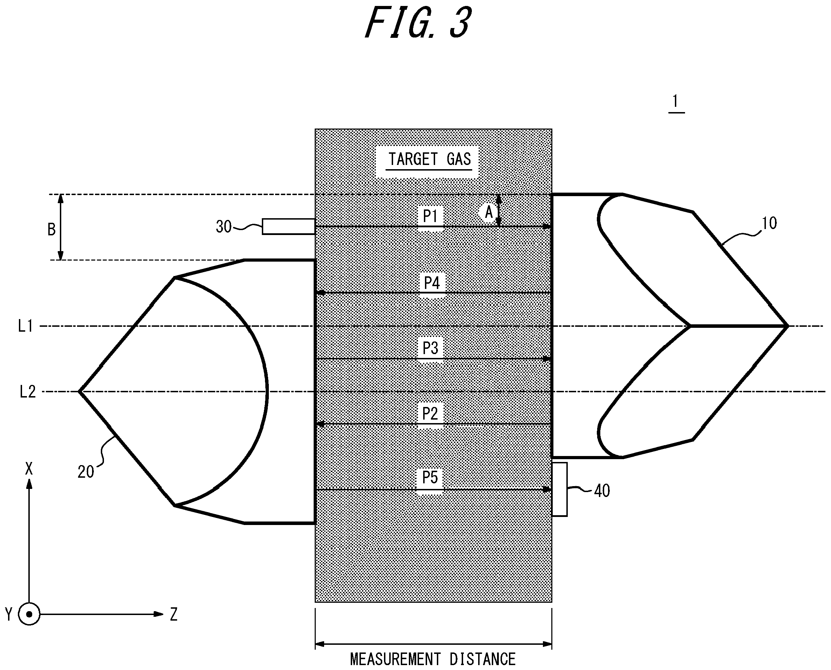

FIG. 3 is a diagram illustrating a schematic configuration of a gas measurement apparatus 1 according to an embodiment. The gas measurement apparatus 1 is a gas measurement apparatus intended to solve the above Issues 1 to 9 in the Herriott cell. With reference to FIG. 3, the configuration and functions of the gas measurement apparatus 1 according to the embodiment will be described.

The gas measurement apparatus 1 is an apparatus that measures a gas concentration by laser absorption spectroscopy. In FIG. 1, a gas to be measured is illustrated as a target gas. In this embodiment, the term "measurement distance" may also be used to mean an end-to-end distance of the target gas.

The gas measurement apparatus 1 includes a first corner cube 10, a second corner cube 20, a laser source 30, and a light receiving element 40.

The first and second corner cubes 10 and 20 are prisms whose tips are cut in three planes. The first and second corner cubes 10 and 20 have a retroreflective property. The retroreflective property is the property of reflecting light to a 180-degree direction with respect to an incident direction, no matter from what direction the light is incident. The first and second corner cubes 10 and 20 may be made of glass.

The target gas to be measured is present between the first and second corner cubes 10 and 20. The second corner cube 20 is disposed opposite the first corner cube 10. In the example illustrated in FIG. 3, an incident surface of the first corner cube 10 is parallel to an XY-plane. An incident surface of the second corner cube 20 is also parallel to the XY-plane. The incident surface of the first corner cube 10 and the incident surface of the second corner cube 20 are in contact with the target gas.

The laser source 30 emits a laser beam to the first corner cube 10. The laser source 30 emits the laser beam having a wavelength at which a light absorption spectrum of a target gas component can be measured. The laser source 30 may be, for example, a lamp source, a light-emitting diode (LED) source, or the like.

The light receiving element 40 receives the laser beam that has been reflected multiple times through the target gas between the first and second corner cubes 10 and 20. The light receiving element 40 may be, for example, a photodiode.

The absorbance of the laser beam can be calculated from the light intensity of the laser beam received by the light receiving element 40. The concentration of the target gas can be calculated from the absorbance of the laser beam. The light receiving element 40 may be connected to an arithmetic device. The arithmetic device can acquire, from the light receiving element 40, the intensity of the laser beam measured by the light receiving element 40, and calculate the absorbance of the laser beam and the concentration of the target gas. The arithmetic device may be a dedicated computer, a general purpose personal computer (PC), a server, or the like.

As illustrated in FIG. 3, the first corner cube 10 and the second corner cube 20 are arranged so that a centerline L1 of the first corner cube 10 and a centerline L2 of the second corner cube 20 are displaced.

The centerline of the first corner cube 10 is a line that is parallel to an incident laser beam passing through the centers of an incident position of the laser beam incident on the incident surface of the first corner cube 10 and an exit position of the laser beam reflected therefrom. The centerline of the second corner cube 20 is a line that is parallel to an incident laser beam passing through the centers of an incident position of the laser beam incident on the incident surface of the second corner cube 20 and an exit position of the laser beam reflected therefrom.

The first corner cube 10 and the second corner cube 20 are displaced in an X direction. At this time, the amount of displacement is adjusted so that the optical path of a laser beam does not pass through the center of the first corner cube 10 or second corner cube 20. In the example illustrated in FIG. 3, the first and second corner cubes 10 and 20 are dispose so that the centerline L1 of the first corner cube 10 and the centerline L2 of the second corner cube 20 are separated by a distance B in the X direction. The distance B between the centerlines L1 and L2 is associated with the number of times the laser beam is reflected from the first and second corner cubes 10 and 20.

For example, the distance B between the centerlines L1 and L2 and the number of reflections can be related as in the following Equation (1).

$$B = \phi/(n-1) \qquad (1)$$

where $\phi$ represents the diameter of the first and second corner cubes 10 and 20, n represents the number of optical paths obtained by multiple reflections between the first and second corner cubes 10 and 20, and (n-1) represents the number of reflections.

For example, when the diameter of the first and second corner cubes 10 and 20 is 50 mm and the number of optical paths is 5, the distance B between the centerlines L1 and L2 may be adjusted to B = 12.5 mm.

The position of the laser source 30 in the X direction may be on the negative side in an X-axis by a distance A from an edge of the first corner cube 10 on the positive side in the X-axis. The distance A may be, for example, 1/2 of the distance B.

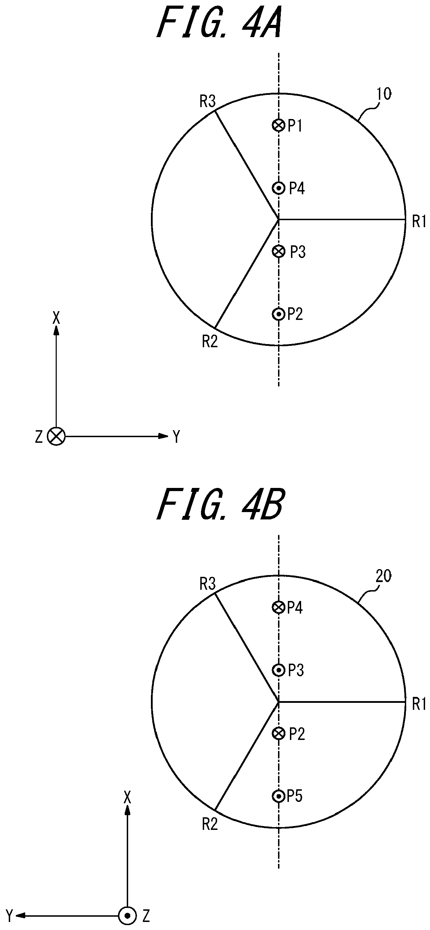

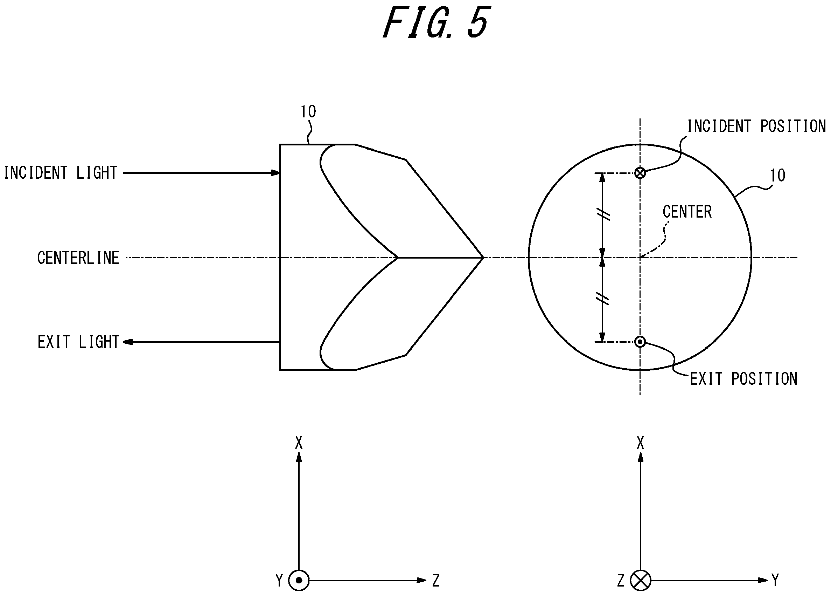

Next, the optical path of a laser beam emitted from the laser source 30 will be described with reference to FIGS. 3, 4A, 4B, and 5. FIG. 4A is a diagram of the first corner cube 10 in FIG. 3, viewed from the negative side in a Z-axis. FIG. 4B is a diagram of the second corner cube 20 in FIG. 3, viewed from the positive side in the Z-axis. FIG. 5 is a diagram illustrating how the first corner cube 10 reflects incident light.

In FIG. 4A, R1 to R3 indicate the boundaries, i.e., ridge lines between the three planes of the first corner cube 10. Similarly, in FIG. 4B, R1 to R3 indicate the boundaries, i.e., ridge lines between the three planes of the second corner cube 20.

The first corner cube 10 has a retroreflective property, as described above. Therefore, as illustrated in FIG. 5, incident light on the first corner cube 10 exits as exit light in a 180-degree direction with respect to the direction of the incident light.

With reference to FIGS. 3, 4A, and 4B, the laser beam emitted from the laser source 30 is incident on the first corner cube 10 through an optical path P1 in the target gas.

The laser beam that has been incident on the first corner cube 10 through the optical path P1 in the target gas is reflected at a position point symmetrical to the center of the first corner cube 10, and exits toward the second corner cube 20. The laser beam that has exited toward the second corner cube 20 passes through an optical path P2 in the target gas.

The laser beam that has passed through the optical path P2 in the target gas is incident on the second corner cube 20. At this time, the second corner cube 20 is disposed at a position that is displaced on the negative side in the X-axis by the distance B relative to the first corner cube 10, so the laser beam that has passed through the optical path P2 is incident on a position close to the center of the second corner cube 20.

The laser beam that has been incident on the second corner cube 20 through the optical path P2 in the target gas is reflected at a position point symmetrical to the center of the second corner cube 20, and exits toward the first corner cube 10. The laser beam that has exited toward the first corner cube 10 passes through an optical path P3 in the target gas.

The laser beam that has passed through the optical path P3 in the target gas is incident on the first corner cube 10. At this time, the laser beam that has passed through the optical path P3 is incident on a position on the negative side in the X-axis relative to the center of the first corner cube 10.

The laser beam that has been incident on the first corner cube 10 through the optical path P3 in the target gas is reflected at a position point symmetrical to the center of the first corner cube 10, and exits toward the second corner cube 20. The laser beam that has exited toward the second corner cube 20 passes through an optical path P4 in the target gas.

The laser beam that has passed through the optical path P4 in the target gas is incident on the second corner cube 20. At this time, the second corner cube 20 is disposed at the position that is displaced on the negative side in the X-axis by the distance B from the first corner cube 10, so the laser beam that has passed through the optical path P4 is incident on a position far from the center of the second corner cube 20.

The laser beam that has been incident on the second corner cube 20 through the optical path P4 in the target gas is reflected at a position point symmetrical to the center of the second corner cube 20, and exits toward the light receiving element 40. The laser beam that has exited toward the light receiving element 40 passes through an optical path P5 in the target gas.

The laser beam that has passed through the optical path P5 in the target gas is incident on the light receiving element 40.

As illustrated in FIG. 3, the laser beam emitted from the laser source 30 is repeatedly reflected clockwise from the optical path P1 to the optical path P3 and counterclockwise from the optical path P4 to the optical path P5. The laser beam emitted from the laser source 30 passes through the target gas five times, so the optical path length of the laser beam passing through the target gas is five times the measurement distance.

Since the ridge lines R1 to R3 of the first and second corner cubes 10 and 20 cause unwanted scattering at ridge edges, it is desirable that the optical paths P1 to P5 pass through paths that are not reflected by the ridge lines R1 to R3, as illustrated in FIGS. 4A and 4B. In other words, an angle at which the first corner cube 10 is rotated around the Z-axis is adjusted to an angle such that the optical paths P1 to P4 do not pass through the ridge lines R1 to R3. An angle at which the second corner cube 20 is rotated around the Z-axis is adjusted to an angle such that light paths P2 to P5 do not pass through the ridge lines R1 to R3.

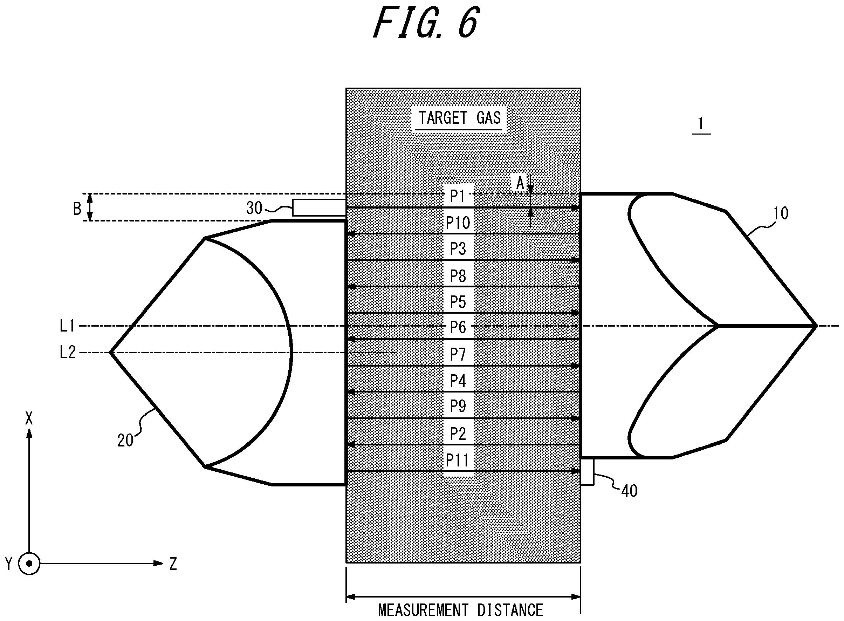

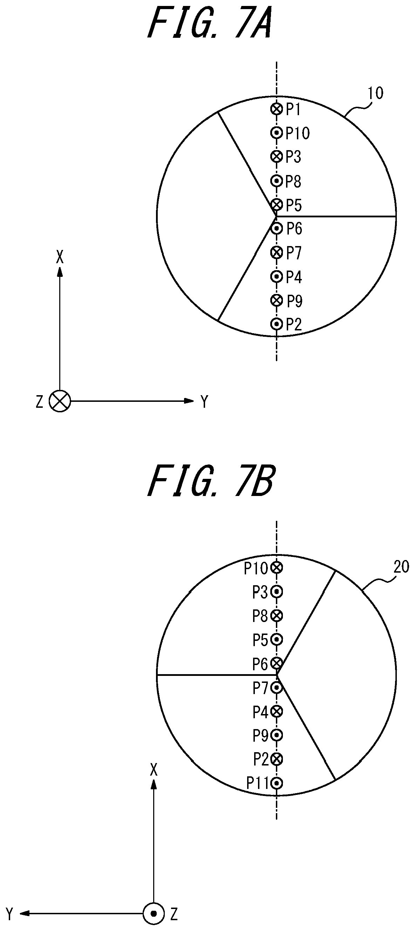

FIGS. 6, 7A, and 7B illustrate a schematic configuration of the gas measurement apparatus 1 according to the embodiment when the number of reflections is adjusted to 11. FIG. 7A is a diagram of the first corner cube 10 in FIG. 6, viewed from the negative side in the Z-axis. FIG. 7B is a diagram of the second corner cube 20 in FIG. 6, viewed from the positive side in the Z-axis.

Using the above Equation (1), when the diameter of the first and second corner cubes 10 and 20 are 50 mm and the number of optical paths is 11, the distance B is calculated as 5 mm. In this case, the distance A may be A = 5/2 = 2.5 mm.

Based on the above calculation, when the first and second corner cubes 10 and 20 are adjusted so that the centerline L1 of the first corner cube 10 and the centerline L2 of the second corner cube 20 are separated by the distance B, that is, 5 mm in the X direction, the laser beam emitted by the laser source 30 is reflected so that the number of optical paths is 11, and is incident on the light receiving element 40.

At this time, as illustrated in FIG. 6, the laser beam emitted from the laser source 30 is repeatedly reflected clockwise from an optical path P1 to an optical path P6 and counterclockwise from an optical path P7 to an optical path P11. The laser beam emitted from the laser source 30 passes through the target gas eleven times, so the optical path length of the laser beam passing through the target gas is eleven times the measurement distance.

As described above, the gas measurement apparatus 1 according to the embodiment reflects the laser beam emitted by the laser source 30 multiple times using the first and second corner cubes 10 and 20, thus increasing the optical path length of the laser beam passing through the target gas.

The gas measurement apparatus 1 according to the embodiment can easily adjust the number of optical paths by simply adjusting the distance B, which is a displacement in the X direction between the centerline L1 of the first corner cube 10 and the centerline L2 of the second corner cube 20.

The effects of the gas measurement apparatus 1 according to the embodiment will be described here as Effects 1 to 9, corresponding to Issues 1 to 9 of the Herriott cell described above.

<Effect 1>

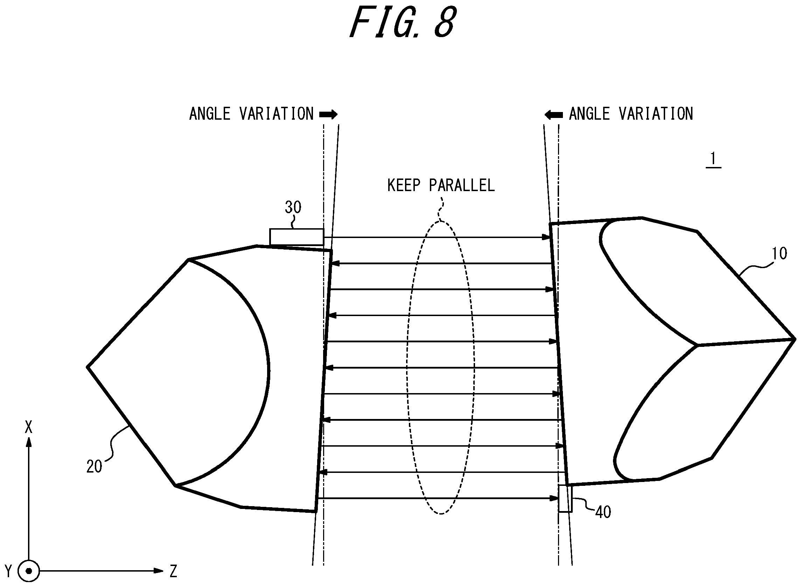

FIG. 8 illustrates the gas measurement apparatus 1 according to the embodiment in which the first and second corner cubes 10 and 20 have angular variations. In the example illustrated in FIG. 8, both of the first and second corner cubes 10 and 20 are inclined with respect to the XY-plane. Even in such a case, the laser beam reflected by the first and second corner cubes 10 and 20 remain parallel to the Z-axis due to the retroreflective property of the first and second corner cubes 10 and 20. In other words, an optical axis does not vary even when the first and second corner cubes 10 and 20 have angular variations. Therefore, even when the laser beam is reflected multiple times, optical path variations do not accumulate. Thus, the gas measurement apparatus 1 according to the embodiment is less susceptible to an influence from a physical variation such as a distortion caused by vibration, temperature, or the like, and is highly stable. In addition, due to the less susceptibility to an influence from a physical variation such as a distortion caused by vibration, temperature, or the like, the gas measurement apparatus 1 according to the embodiment is easy to adjust and does not require special processing to make an adjustment.

<Effect 2>

In the first and second corner cubes 10 and 20, the attenuation of light intensity, due to the transmission of the laser beam through the reflective surfaces, does not occur. The first and second corner cubes 10 and 20 are made of glass and reflect the laser beam in the three planes. At this time, since the incident angle of the laser beam on the three planes is larger than the critical angle, the reflection in the three planes is total reflection.

<Effect 3>

In the gas measurement apparatus 1 according to the embodiment, the same first corner cube 10, second corner cube 20, laser source 30, and light receiving element 40 can be used without need for replacement depending on the measurement distance. This is because the first and second corner cubes 10 and 20 have the retroreflective property, so the laser beam passing through the target gas remains parallel regardless of the measurement distance, and the parameters of each component need not be adjusted according to the measurement distance.

<Effect 4>

In the gas measurement apparatus 1 according to the embodiment, the number of optical paths can be easily adjusted by simply adjusting the distance B, which is the displacement in the X direction between the centerline L1 of the first corner cube 10 and the centerline L2 of the second corner cube 20.

<Effect 5>

An adjustment of the incident angle of the laser source 30 is easy because the incident angle is simply adjusted so as to be perpendicular to the XY-plane. Also, since an increase in sensitivity due to angle accumulation caused by the number of reflections is small, the incident angle of the laser source 30 can be easily adjusted. In addition, even when the position of the laser source 30 in the X direction deviates, the amount of deviation is a deviation in the position of the light receiving element 40 in the X direction as is, thus facilitating adjustment so that the light receiving element 40 can receive the laser beam.

<Effect 6>

Since the incident surfaces of the first and second corner cubes 10 and 20 are flat, the optical path length can be easily calculated.

<Effect 7>

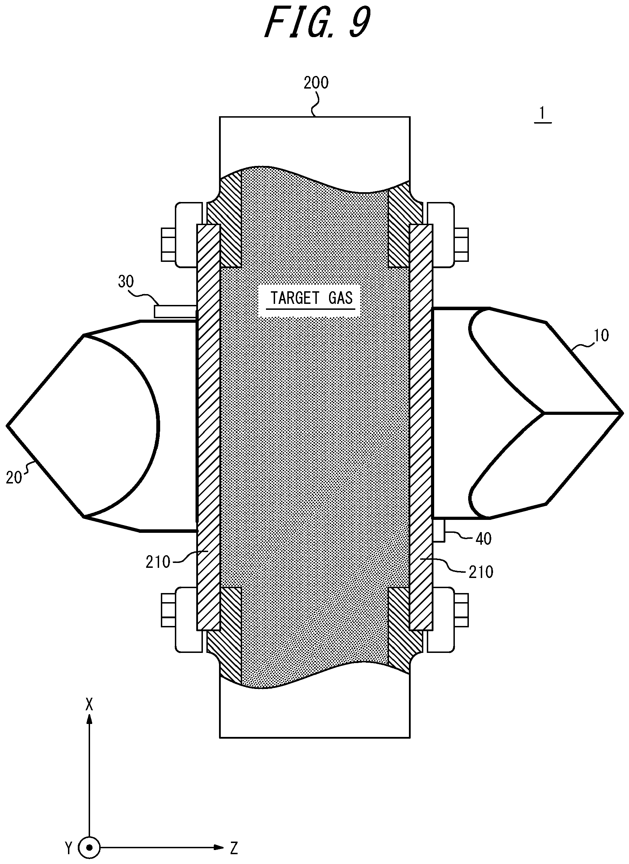

FIG. 9 illustrates the first and second corner cubes 10 and 20 of the gas measurement apparatus 1 according to the embodiment that are disposed in contact with window glass 210 for measurement provided in a pipe 200 with a target gas inside. Since the incident surfaces of the first and second corner cubes 10 and 20 are flat, the incident surfaces of the first and second corner cubes 10 and 20 can be in close contact with the window glass 210. Accordingly, no gap 220 is left as illustrated in FIG. 2. Therefore, the laser beam can be prevented from passing through a gas different from the target gas, thus reducing an error due to the passage of the gas different from the target gas.

<Effect 8>

As illustrated in FIG. 6, the laser beam emitted by the laser source 30 is directly incident on the first corner cube 10. The laser beam exiting from the second corner cube 20 is directly incident on the light receiving element 40. Therefore, it is not necessary to provide additional holes, which allow the laser beam to pass through, in the first and second corner cubes 10 and 20 of the gas measurement apparatus 1 according to the embodiment.

<Effect 9>

The first and second corner cubes 10 and 20 totally reflect the laser beam in the three planes. This total reflection is due to the fact that the critical angle, which is determined by the refractive index of the glass that is a material for the first and second corner cubes 10 and 20 and the refractive index of a gas such as an atmosphere around the first and second corner cubes 10 and 20, is adjusted to be larger than the incident angle of the laser beam on the three planes. Therefore, it is not necessary to apply a mirror coating to the first and second corner cubes 10 and 20.

The gas measurement apparatus 1 according to the embodiment as described above can improve various characteristics in laser absorption spectroscopy using multiple reflections. More specifically, the gas measurement apparatus 1 includes the first corner cube 10, the second corner cube 20 disposed opposite the first corner cube 10, the laser source 30 that emits a laser beam to the first corner cube 10, and the light receiving element 40 that receives the laser beam that has been reflected multiple times through a target gas between the first and second corner cubes 10 and 20. The second corner cube 20 is disposed so that the centerline of the first corner cube 10 is displaced from the centerline of the second corner cube 20. This configuration allows the gas measurement apparatus 1 according to the embodiment to have the effects described above in Effects 1 to 9 and to have improved various characteristics in laser absorption spectroscopy using multiple reflections.

(First Variation)

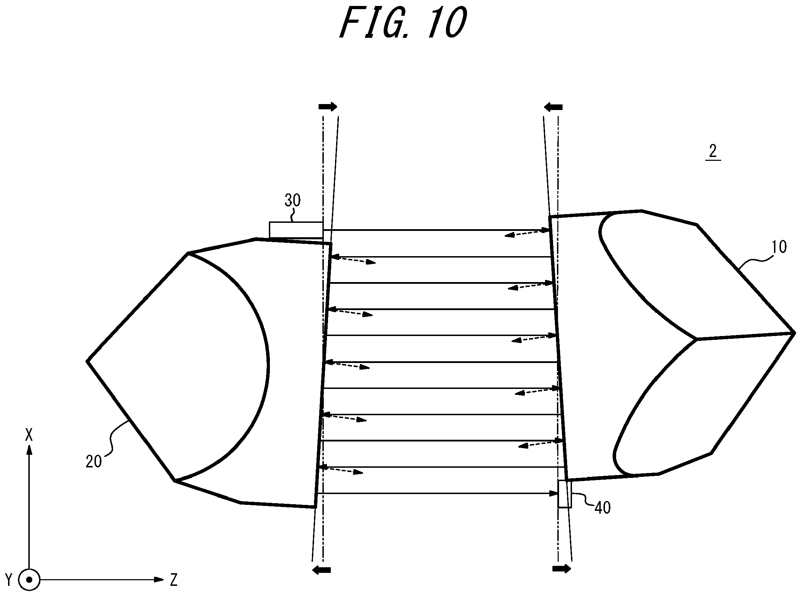

FIG. 10 is a diagram illustrating a schematic configuration of a gas measurement apparatus 2 according to a first variation. The gas measurement apparatus 2 according to the first variation includes a first corner cube 10, a second corner cube 20, a laser source 30, and a light receiving element 40. The gas measurement apparatus 2 according to the first variation will be mainly described in terms of a difference from the gas measurement apparatus 1 illustrated in FIG. 3, and a description of contents common to the gas measurement apparatus 1 illustrated in FIG. 3 will be omitted as appropriate.

The gas measurement apparatus 2 according to the first variation differs from the gas measurement apparatus 1 illustrated in FIG. 3 in that incident surfaces of the first and second corner cubes 10 and 20 are inclined with respect to an XY-plane. Here, the XY-plane is a plane perpendicular to a direction in which the laser source 30 emits a laser beam to the first corner cube 10.

In FIG. 10, the dashed arrows indicate reflected light that occurs by unwanted reflections from the incident surfaces of the first and second corner cubes 10 and 20. This reflected light by the unwanted reflections is reflected light that is simply reflected at the incident surfaces of the first and second corner cubes 10 and 20. Therefore, the reflected light by the unwanted reflection is not retroreflective and is not parallel to a Z-axis.

In the gas measurement apparatus 1 illustrated in FIG. 3, when unwanted reflections as described above occur and a laser beam due to the unwanted reflections is incident on the light receiving element 40, the laser beam interferes with the original laser beam, thus resulting in increased measurement noise and error factors.

On the contrary, in the gas measurement apparatus 2 according to the first variation, since the incident surfaces of the first and second corner cubes 10 and 20 are inclined with respect to the XY-plane, the laser beam due to the unwanted reflections can be separated from the original laser beam. Therefore, the gas measurement apparatus 2 according to the first variation can improve measurement accuracy and stability by reducing the influence of the unwanted reflections.

(Second Variation)

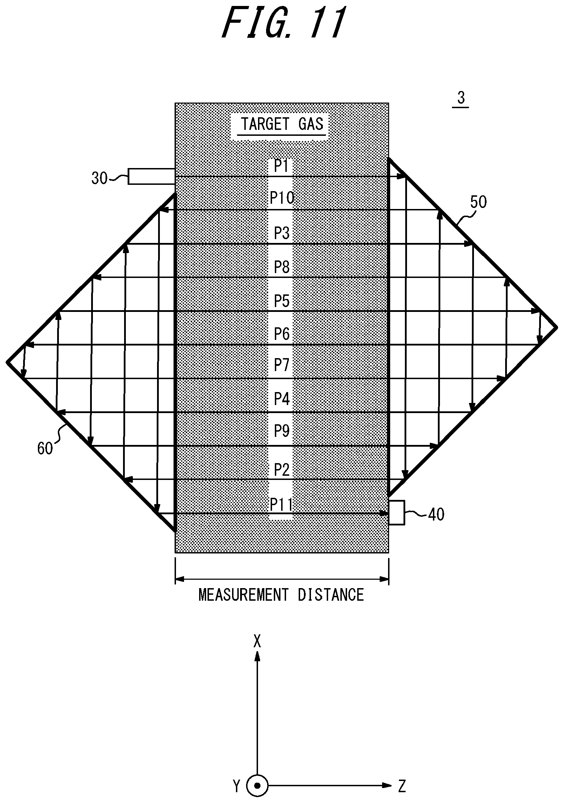

FIG. 11 is a diagram illustrating a schematic configuration of a gas measurement apparatus 3 according to a second variation. The gas measurement apparatus 3 according to the second variation includes a first right angle prism 50, a second right angle prism 60, a laser source 30, and a light receiving element 40. The gas measurement apparatus 3 according to the second variation will be mainly described in terms of a difference from the gas measurement apparatus 1 illustrated in FIG. 3, and a description of contents common to the gas measurement apparatus 1 illustrated in FIG. 3 will be omitted as appropriate.

The gas measurement apparatus 3 according to the second variation differs from the gas measurement apparatus 1 illustrated in FIG. 3 in that the first and second right angle prisms 50 and 60 are provided, instead of the first and second corner cubes 10 and 20.

The first and second right angle prisms 50 and 60 are prisms having two orthogonal planes. The first and second right angle prisms 50 and 60 may be made of glass.

FIG. 11 illustrates a schematic configuration in which the positions of the first and second right angle prisms 50 and 60 in an X-axis direction are adjusted so that the number of reflections is 10.

The first and second right angle prisms 50 and 60 reflect incident light that is incident parallel to a YZ-plane to a direction parallel to the YZ-plane, even when incident surfaces rotate about a Y-axis direction. Therefore, even when the incident surfaces of the first and second right angle prisms 50 and 60 vary in the direction of rotation about the Y-axis direction, due to a distortion caused by vibration, temperature, or the like, the gas measurement apparatus 3 according to the second variation has the effect of being less susceptible to the influence.

As described above, even the gas measurement apparatus 3 including the first and second right angle prisms 50 and 60, which are simpler, less expensive, and more readily available components than the first and second corner cubes 10 and 20, has the effect of being less susceptible to a physical variation such as a distortion caused by vibration, temperature, or the like.

Since the first and second right angle prisms 50 and 60 do not have a perfect retroreflective property, the gas measurement apparatus 1 illustrated in FIG. 3 is less susceptible to various positional variations. For example, when the incident surface is inclined about the X-axis, the gas measurement apparatus 3 according to the second variation does not reflect incident light in a 180-degree direction, while the gas measurement apparatus 1 illustrated in FIG. 3 reflects incident light in a 180-degree direction.

(Third Variation)

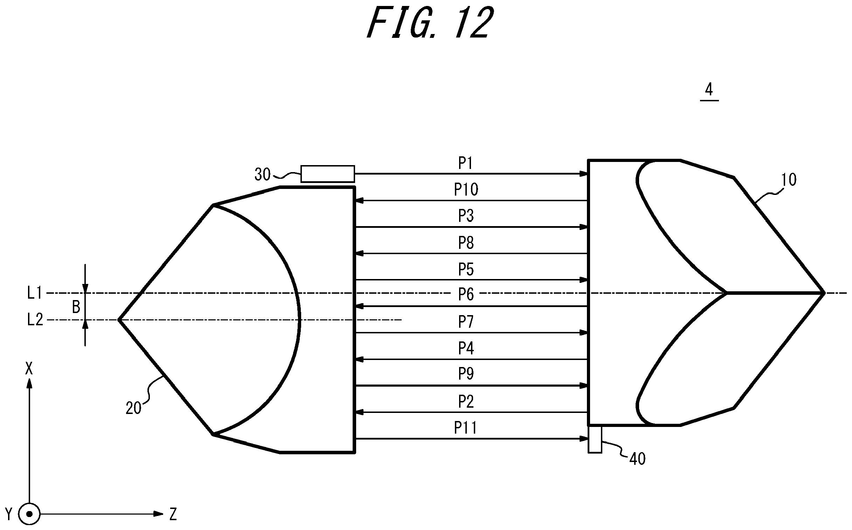

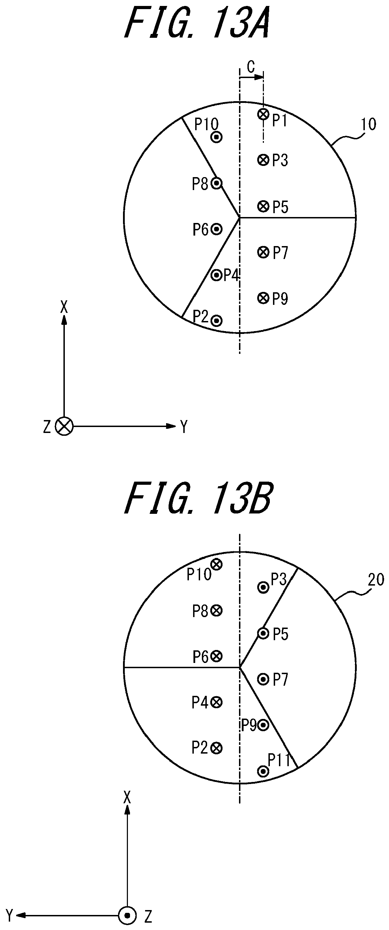

FIGS. 12, 13A, and 13B are diagrams illustrating a schematic configuration of a gas measurement apparatus 4 according to a third variation. The gas measurement apparatus 4 according to the third variation includes a first corner cube 10, a second corner cube 20, a laser source 30, and a light receiving element 40.

FIG. 13A is a diagram of the first corner cube 10 in FIG. 12, viewed from the negative side in a Z-axis. FIG. 13B is a diagram of the second corner cube 20 in FIG. 12, viewed from the positive side in the Z-axis.

The gas measurement apparatus 4 according to the third variation will be mainly described in terms of a difference from the gas measurement apparatus 1 illustrated in FIG. 3, and a description of contents common to the gas measurement apparatus 1 illustrated in FIG. 3 will be omitted as appropriate.

The gas measurement apparatus 4 according to the third variation differs from the gas measurement apparatus 1 illustrated in FIG. 3 in that the laser source 30 is disposed in a position that is displaced from the center in a Y-axis direction by a predetermined distance C.

With reference to FIG. 13A, the position of the laser source 30 is displaced from the center in the Y-axis direction by the distance C, so the position of an optical path P1 at the incident surface of the first corner cube 10 is displaced in the Y-axis direction by the distance C.

When a first direction denotes an X-axis direction, a second direction denotes the Y-axis direction, and a third direction denotes a Z-axis direction, the laser source 30 is disposed in a position that is displaced from the center to the second direction by a predetermined distance.

As illustrated in FIG 13A, a laser beam that has been incident on the first corner cube 10 through the optical path P1 in a target gas is reflected at a position point symmetrical to the center of the first corner cube 10 and exits toward the second corner cube 20. The laser beam that has exited toward the second corner cube 20 passes through an optical path P2 in the target gas.

Thus, when the position of the laser source 30 is displaced in the Y-axis direction by the predetermined distance C, the optical paths of the laser beam passing through the target gas become two rows. This allows the laser beam to pass through a wide area of the target gas, thus enabling measurement of a gas concentration over the wide area.

The gas measurement apparatus 4 according to the third variation can adjust an area over which the gas concentration is measured, by adjusting the predetermined distance C. To measure a gas concentration over a wide area, the predetermined distance C may be increased. To measure a gas concentration over a narrow area, the predetermined distance C may be decreased.

(Fourth Variation)

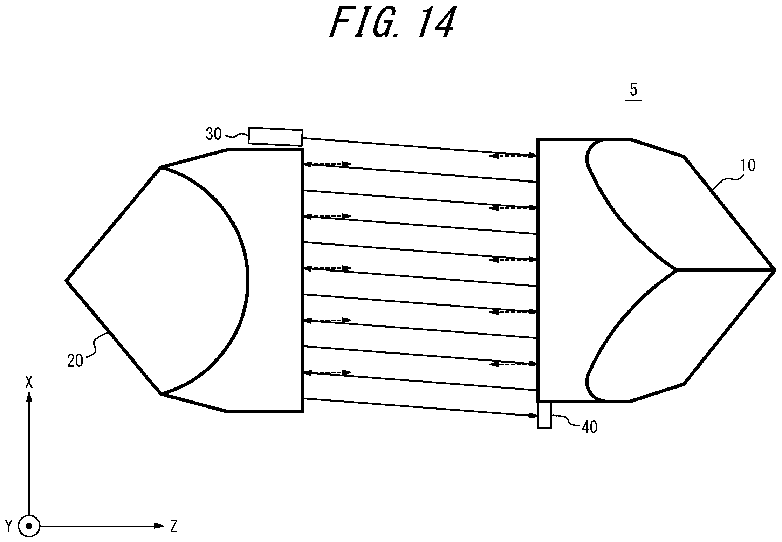

FIG. 14 is a diagram schematically illustrating a gas measurement apparatus 5 according to a fourth variation. The gas measurement apparatus 5 according to the fourth variation includes a first corner cube 10, a second corner cube 20, a laser source 30, and a light receiving element 40. The gas measurement apparatus 5 according to the fourth variation will be mainly described in terms of a difference from the gas measurement apparatus 1 illustrated in FIG. 3, and a description of contents common to the gas measurement apparatus 1 illustrated in FIG. 3 will be omitted as appropriate.

The gas measurement apparatus 5 according to the fourth variation differs from the gas measurement apparatus 1 illustrated in FIG. 3 in that the laser source 30 emits a laser beam obliquely with respect to an incident surface of the first corner cube 10.

The gas measurement apparatus 5 according to the fourth variation can adjust the number of reflections by changing the angle of the laser beam emitted by the laser source 30 with respect to the incident surface of the first corner cube 10.

This allows the gas measurement apparatus 5 according to the fourth variation to adjust the number of reflections without changing the positions of the first and second corner cubes 10 and 20 in the X-axis direction, while keeping the positions of the first and second corner cubes 10 and 20 secured.

In FIG. 14, the dashed arrows indicate reflected light that occurs by unwanted reflections from the incident surfaces of the first and second corner cubes 10 and 20. When the laser source 30 emits the laser beam obliquely with respect to the incident surface of the first corner cube 10, as illustrated in FIG. 14, laser beams due to the unwanted reflections can be separated from the original laser beam. Therefore, the gas measurement apparatus 5 according to the fourth variation can improve measurement accuracy by reducing the influence of the unwanted reflections.

It is obvious to a person skilled in the art that the present disclosure can be realized in predetermined forms other than the embodiment described above, without departing from its gist or its essential features. Accordingly, the preceding description is illustrative and not limiting. The scope of the disclosure is defined by the appended claims, not by the preceding description. Among all modifications, some modifications that are within the scope of the equivalents are encompassed therein.

For example, the disposition, number, and the like of components described above are not limited to those illustrated in the above description and drawings. The disposition, number, and the like of the components may be configured arbitrarily as long as the functions can be realized.

For example, the configurations illustrated in the first to fourth variations above may be combined as appropriate.

For example, in the embodiment described above, the gas measurement apparatus 1 is illustrated as including the first corner cube 10 and the second corner cube 20, but optical elements included in the gas measurement apparatus 1 to reflect the laser beam are not limited to the corner cubes. The gas measurement apparatus 1 may include any optical elements having a retroreflective property, instead of the first and second corner cubes 10 and 20.

For example, the embodiment described above illustrates a case in which the first and second corner cubes 10 and 20 have the same size, but the first and second corner cubes 10 and 20 may have different sizes.

For example, in the embodiment described above, the gas measurement apparatus 1 is configured with the two corner cubes, i.e., the first corner cube 10 and the second corner cube 20, but the gas measurement apparatus 1 may include three or more corner cubes.

For example, in the embodiment described above, the laser source 30 and the light receiving element 40 are disposed on opposite sides across the target gas, but the laser source 30 and the light receiving element 40 may be disposed on the same side of the target gas. Disposing the laser source 30 and the light receiving element 40 on the same side is possible when, for example, the gas measurement apparatus 1 is configured with three corner cubes.

**Claims**

1. A gas measurement apparatus configured to measure a gas concentration by laser absorption spectroscopy, the gas measurement apparatus comprising:

   a first corner cube or first right angle prism;
   a second corner cube or second right angle prism disposed opposite the first corner cube or first right angle prism;
   a laser source configured to emit a laser beam to the first corner cube or first right angle prism; and
   a light receiving element configured to receive the laser beam that has been reflected multiple times through a target gas between the first corner cube or first right angle prism and the second corner cube or second right angle prism,
   wherein the second corner cube or second right angle prism is disposed so that a centerline that is parallel to incident and exit light centering at an incident position and an exit position of the first corner cube or first right angle prism is displaced from a centerline that is parallel to incident and exit light centering at an incident position and an exit position of the second corner cube or second right angle prism.

2. The gas measurement apparatus according to claim 1, wherein a number of reflections of the laser beam between the first corner cube or first right angle prism and the second corner cube or second right angle prism can be adjusted by a distance by which the centerline of the first corner cube or first right angle prism and the centerline of the second corner cube or second right angle prism are displaced.

3. The gas measurement apparatus according to claim 1, wherein an incident surface of the first corner cube or first right angle prism and an incident surface of the second corner cube or second right angle prism are inclined with respect to a plane perpendicular to a direction in which the laser source emits the laser beam to the first corner cube or first right angle prism.

4. The gas measurement apparatus according to claim 1, wherein an incident surface of the first corner cube or first right angle prism and an incident surface of the second corner cube or second right angle prism are close in contact with window glass provided in a pipe with the target gas inside.

5. The gas measurement apparatus according to claim 1, wherein when a first direction denotes a direction in which the centerline of the first corner cube or first right angle prism and the centerline of the second corner cube or second right angle prism are displaced, a third direction denotes a direction in which the laser beam is incident on the first corner cube or first right angle prism, and a second direction denotes a direction orthogonal to the first direction and the third direction, the laser source is disposed in a position that is displaced from a center to the second direction by a predetermined distance.

6. The gas measurement apparatus according to claim 1, wherein the laser source emits the laser beam obliquely with respect to an incident surface of the first corner cube or first right angle prism.

# FIG. 1

TARGET GAS

104

103

102

101

MEASUREMENT DISTANCE

# FIG. 2

*FIG. 3*

EP 4 455 638 A1

## FIG. 4A

## FIG. 4B

# *FIG. 5*

INCIDENT LIGHT

CENTERLINE

EXIT LIGHT

10

INCIDENT POSITION

CENTER

10

EXIT POSITION

EP 4 455 638 A1

# FIG. 6

TARGET GAS

1

P1

B

A

30

P10

10

P3

P8

P5

L1

P6

P7

L2

P4

P9

20

P2

P11

40

X

Y

Z

MEASUREMENT DISTANCE

EP 4 455 638 A1

# FIG. 7A

# FIG. 7B

# FIG. 9

FIG. 10

# FIG. 11

EP 4 455 638 A1

# FIG. 12

*FIG. 13A*

*FIG. 13B*

FIG. 14

EP 4 455 638 A1

Europäisches
Patentamt

European
Patent Office

Office européen
des brevets

# EUROPEAN SEARCH REPORT

**Application Number**

EP 24 17 0820

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 203 894 137 U (UNIV JIANGSU NORMAL) 22 October 2014 (2014-10-22) * paragraphs [0009], [0014]; claim 1; figure 1 * | 1,2 | INV. G01N21/03 |
| X | CN 111 537 453 A (LASER INST SHANDONG ACADEMY OF SCIENCES) 14 August 2020 (2020-08-14) * paragraphs [0028] - [0031], [0038] - [0042]; claims 1,3,6-8; figures 3,4 * | 1,2,4 | |
| X | CN 107 941 751 A (NANJING SCIYON AUTOMATION GROUP CO LTD) 20 April 2018 (2018-04-20) * paragraphs [0001], [0022], [0030]; claims 1-3,6; figures 1,3,5 * | 1,2,4-6 | |
| X | CN 108 507 959 A (JINAN SENTE ELECTRONICS TECH CO LTD) 7 September 2018 (2018-09-07) * paragraphs [0025], [0041]; claims 1,2; figures 1,3,4 * | 1,6 | |
| | | | **TECHNICAL FIELDS SEARCHED (IPC)** |
| X | JP 2008 026229 A (SHIMADZU CORP) 7 February 2008 (2008-02-07) * paragraphs [0001] - [0004], [0013], [0014], [0018] - [0020], [0030] - [0038], [0077], [0081], [0082]; figures 3(d), 3(e),35B * | 1-4,6 | G01N |

The present search report has been drawn up for all claims

| Place of search | Date of completion of the search | Examiner |
|---|---|---|
| Munich | 11 September 2024 | Duijs, Eric |

EPO FORM 1503 03.82 (P04C01)

## ANNEX TO THE EUROPEAN SEARCH REPORT
## ON EUROPEAN PATENT APPLICATION NO.

EP 24 17 0820

11-09-2024

| Patent document cited in search report | | Publication date | Patent family member(s) | | Publication date |
|---|---|---|---|---|---|
| CN 203894137 | U | 22-10-2014 | NONE | | |
| CN 111537453 | A | 14-08-2020 | CN 111537453 A | | 14-08-2020 |
| | | | US 2023324281 A1 | | 12-10-2023 |
| | | | WO 2021212931 A1 | | 28-10-2021 |
| CN 107941751 | A | 20-04-2018 | NONE | | |
| CN 108507959 | A | 07-09-2018 | NONE | | |
| JP 2008026229 | A | 07-02-2008 | JP 4831326 B2 | | 07-12-2011 |
| | | | JP 2008026229 A | | 07-02-2008 |

**EP 4 455 638 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023073866 A
- JP 2019215211 A